# EUROPÄISCHE PATENTSCHRIFT

(11) **EP 2 803 588 B1**
(45) Veröffentlichungstag und Bekanntmachung des Hinweises auf die Patenterteilung: **30.11.2016**
(21) Anmeldenummer: 14165084.6
(22) Anmeldetag: 17.04.2014
(51) Int. Cl.: B65B 13/22, B65B 27/04, G01L 5/04

(54) **Verfahren und Vorrichtung zur Herstellung von Umreifungsgebinden sowie Verfahren zur Erfassung einer Bandspannung solcher Umreifungsgebinde**
Method and device for the preparation of strapping bindings and measuring method for detecting a tape tension of such strapping bindings
Procédé et dispositif de fabrication de gerbe de cerclage et procédé de mesure destiné à détecter une tension de bande d'une telle gerbe de cerclage

(30) Priorität: 16.05.2013 DE 102013209139
(43) Veröffentlichungstag der Anmeldung: 19.11.2014
(73) Patentinhaber: Krones Aktiengesellschaft, 93073 Neutraubling (DE)
(72) Erfinder: Napravnik, Christian, 93073 Neutraubling (DE)
(74) Vertreter: Benninger, Johannes

(56) Entgegenhaltungen:
- EP-A1- 2 206 650
- EP-A1- 2 489 597
- WO-A1-2011/045440
- DE-A1- 3 203 815
- FR-A1- 2 660 754
- FR-A1- 2 866 290
- JP-A- H0 811 819
- JP-A- S61 264 233

## Beschreibung

Die vorliegende Erfindung betrifft ein Verfahren und eine Vorrichtung zur Herstellung eines Umreifungsgebindes, das mindestens zwei miteinander verbundene Artikel wie bspw. Flüssigkeitsbehälter umfasst, die mit einer horizontal um eine Außenseite der Artikel oder Behälter gespannten, band- oder streifenartigen Umreifung zusammengehalten sind. Weiterhin betrifft die Erfindung ein Verfahren zur Erfassung einer Bandspannung solcher Umreifungsgebinde.

Der Aufbau und die Eigenschaften solcher Umreifungsgebinde gehen aus der internationalen Patentanmeldung WO 2011 /045440 A1 hervor. Neben diesen bekannten Umreifungsgebinden sind verschiedene weitere Möglichkeiten bekannt und gebräuchlich, einzelne Artikel zu größeren Gebinden zusammenzufassen. So werden bspw. Getränkebehälter oftmals mittels Schrumpffolien zu stabilen, transportablen Gebinden von vier, sechs oder mehr Behältern zusammengefasst und verpackt. Die Herstellung solcher Umreifungs- oder Schrumpfgebinde ist aus praktischen Erwägungen meist unumgänglich, da sie die häufigste Variante von Verkaufseinheiten für Getränkebehälter und Flaschen aus PET-Kunststoff darstellen. Diese Gebinde werden für den Transport zum Zwischen- und/oder Endhandel teilweise zu sog. Großgebinden zusammengefasst und/oder in Lagen zusammengestellt und palettiert.

Die für Umreifungsgebinde eingesetzten Umreifungsbänder können wahlweise aus Metall bestehen. Üblicherweise werden jedoch Bänder aus Kunststoff, insbesondere aus PET eingesetzt, die unter Vorspannung an einer Überlappungsstelle miteinander verschweißt oder verklammert werden. Diese Umreifungsbänder aus Kunststoff lassen sich leicht unter Vorspannung verschweißen und mit gewissem Kraftaufwand unter Zerstörung der verschweißten Verbindungsstelle vom Endkunden wieder lösen, wenn einzelne Behälter vom Gebinde getrennt werden sollen.

Da die nach dem Aufbringen des Umreifungsbandes und nach dem Verschweißen bestehende Bandspannung ein wesentliches Qualitätsmerkmal des Gebindes bildet, ist der Herstellung einer ausreichenden, nicht zu hohen Bandspannung eine gewisse Sorgfalt zu widmen, was in aller Regel durch geeignete Messeinrichtungen in den eingesetzten Umreifungsapplikatoren erfolgen kann. Auf diese Weise kann bereits bei der Umhüllung der Behälter mit dem Umreifungsband für die erforderliche Bandspannung gesorgt werden, die schließlich durch das Verschweißen oder Verkleben des Umreifungsbandes unveränderlich fixiert wird.

Die EP 2 206 650 A1 offenbart eine Vorrichtung zur Ermittlung der Spannung eines Umreifungsbandes, das durch eine Packstückumreifungsmaschine aufgebracht wird. Eine Umlenkrolle, die einen gespannten Abschnitt eines Umreifungsbandes umlenkt, ist in einer Konsole drehbar gelagert, die sich gegenüber einem Maschinengehäuse oder Rahmenabschnitt der Maschine über eine Kraft- oder Druckmessdose abstützt. Auf diese Weise kann die im Umreifungsband herrschende Zugkraft erfasst werden, um auf diese Weise die Bandspannung während der Aufbringung des Umreifungsbandes zu regulieren.

Die EP 2 489 597 A1 beschreibt weiterhin eine Vorrichtung und ein Verfahren zur Herstellung von umreiften Gebinden sowie ein Regelungs- und/oder Steuerungsverfahren für eine Umreifungsvorrichtung. Die Vorrichtung umfasst Einrichtungen zur Erfassung von Eigenschaften der zu umreifenden Artikel, die mit einer Einrichtung zur Erzeugung einer definierten Spannkraft der Umreifung gekoppelt sind. Auf diese Weise soll insbesondere in Abhängigkeit der Artikelnachgiebigkeit eine passende Umreifungsspannung eingestellt werden, um eine zu hohe oder zu niedrige Bandspannung zu vermeiden.

JPH0811819 offenbart eine Vorrichtung und ein Verfahren zur Herstellung eines Umreifungsgebindes, bei dem mindestens zwei Artikel mit wenigstens einer vertikal um jeweilige Außenseiten der Artikel gespannten, band- oder streifenartigen, geschlossenen Umreifung zusammengehalten und miteinander verbunden werden, welche Umreifung durch ein, zwei oder mehr gleichartige oder unterschiedliche Umreifungsbänder aus Kunststoff oder einem Verbundmaterial gebildet werden, deren Enden unter Aufbringung einer definierbaren Bandspannung aneinander fixiert werden, wonach die Bandspannung des wenigstens einen Umreifungsbandes der Umreifung durch Erfassung einer Impulsantwort eines auf das Umreifungsband aufgebrachten mechanischen Impulses erfasst wird.

Sofern die Bandspannung nach dem Aufbringen der Umreifung dennoch zu hoch oder zu gering ist, eignet sich das Gebinde oftmals nicht mehr für einen Verkauf und muss zur Entfernung der den Vorgaben nicht entsprechenden Umreifung und zur Aufbringung einer neuen Umreifung aus dem laufenden Produktions- und/oder Verpackungsprozess ausgesondert werden.

Um diesen Nachteil zu vermeiden, besteht das vorrangige Ziel der vorliegenden Erfindung darin, ein einfach handhabbares und kostengünstiges Verfahren sowie eine entsprechende Vorrichtung zur Verfügung zu stellen, mit denen sich eine Bandspannung bei einem Umreifungsgebinde schnell und zuverlässig, vorzugsweise in einem laufenden Produktions- oder Transportprozess, erfassen lässt.

Dieses Ziel der Erfindung wird mit den Gegenständen der unabhängigen Patentansprüche erreicht, wobei sich Merkmale vorteilhafter Weiterbildungen der Erfindung aus den abhängigen Ansprüchen ergeben. Zur Erreichung des Ziels schlägt die vorliegende Erfindung ein Verfahren zur Herstellung eines Umreifungsgebindes vor, bei dem mindestens zwei Artikel mit wenigstens einer horizontal um jeweilige Außenseiten der Artikel gespannten, band- oder streifenartigen, geschlossenen Umreifung zusammengehalten und miteinander verbunden werden. Die Umreifung wird hierbei durch ein, zwei oder mehr gleichartige oder unterschiedliche Umreifungsbänder aus Kunststoff oder einem Verbundmaterial gebildet, deren Enden unter Aufbringung einer definierbaren Bandspannung aneinander fixiert werden, wonach die Bandspannung des wenigstens einen Umreifungsbandes der Umreifung durch Erfassung einer Impulsantwort eines auf das Umreifungsband aufgebrachten mechanischen Impulses erfasst wird, wobei der Impuls durch einen mechanisch wirkenden Stößel, Klöppel, Hammer o. dgl. aufgebracht wird und wobei die Impulsantwort als direkte Rückwirkung auf den Stößel, Klöppel, Hammer o. dgl. erfasst wird. Der mechanische Impuls kann insbesondere durch einen Druckstoß und/oder durch einen mechanischen Schlag auf das Umreifungsband aufgebracht werden, dessen Impulsantwort erfasst und ausgewertet werden kann. Sowohl die Aufbringung des Druckstoßes als auch die Erfassung der Impulsantwort kann wahlweise rein mechanisch, bspw. durch einen Druckstoß, einen Luftdruckimpuls, einen Schalldruckimpuls o. dgl. erfolgen. Bei diesen vorgeschlagenen Varianten der Impulseinleitung kann die Erfassung der Impulsantwort wahlweise ebenfalls mechanisch, bspw. durch Beschleunigungssensoren o. dgl. oder auch akustisch oder optisch erfolgen, bspw. durch Erfassung der Bandbewegungen nach Aufbringung des Druckstoßes oder durch Erfassung der vom Band erzeugten Schallwellen oder Luftdruckwellen, wenn ein mechanischer Impuls eingeleitet wurde.

Wenn auch im vorliegenden Zusammenhang meist von Artikeln die Rede ist, aus denen ein Umreifungsgebinde gebildet ist, so sei an dieser Stelle vorsorglich erwähnt, dass damit grundsätzlich alle Arten von Stückgütern, insbesondere jedoch Behälter, Flüssigkeitsbehälter oder Getränkebehälter gemeint sein können, ohne dass dies jeweils gesondert erwähnt ist.

Eine besonders kostengünstige Variante des erfindungsgemäßen Verfahrens kann vorsehen, dass die Impulsantwort mit einem Kraftsensor, einem Drucksensor und/oder einem Beschleunigungssensor erfasst wird, dessen/ deren Sensorsignale zur Erfassung der Bandspannung ausgewertet werden. Zur Herstellung des Schlag- oder Druckimpulses kann bspw. ein linear beweglicher mechanischer Stößel eingesetzt werden. Besonders gut kann sich auch ein drehbar gelagerter Hebel eingesetzt werden, der als Stößel oder Schlagelement fungiert und mit seinem Kopf mit definierter Aufschlaggeschwindigkeit auf einer definierten Stelle der Umreifung auftreffen kann. Darüber hinaus eignen sich auch andere Varianten zur Herstellung eines Druckimpulses wie bspw. Druckdüsen zum Ausstoß von Druckluft oder Schallwandler zur Herstellung einer Druckwelle durch Luftübertragung o. dgl.

Zur Erfassung der Impulsantwort eignen sich Beschleunigungssensoren, die bspw. innerhalb der Stößel angeordnet oder mit diesen gekoppelt sein können. Diese Sensoren messen die Beschleunigung, die der Stößel bei seinem Aufprall auf das Umreifungsband erfährt. Das Messprinzip beruht im Wesentlichen darauf, dass durch den verwendeten Stößel oder Klöppel das Umreifungsband quer zur Transportrichtung des Umreifungsgebinde oder auch in Transportrichtung angestoßen wird, ohne dass hierdurch das Gebinde verschoben wird. Letzteres wird durch eine geeignet geringe Masse des Stößels oder Klöppels erreicht, die nicht ausreicht, um das Gebinde zu verschieben. Die Verzögerung des Stößels und/oder Klöppels am Band kann gemessen werden. Je härter das Umreifungsband gespannt ist, desto höher ist der resultierende Verzögerungswert (in m/s²). Aus der Verzögerung des Stößels oder Klöppels kann die Bandspannung ermittelt werden. Die Verzögerung kann sensorisch mit verschiedenen Mitteln erfasst werden. z.B. mit geeigneten Halbleiterbeschleunigungssensoren, Festkörpermikrofonen oder auch mit einer Wegerfassung über die Zeit und anschließender zweimaliger Differentiation in der Steuerung. Der Stößel oder Klöppel kann wahlweise linear oder in rotatorischer Bewegung arbeiten. Die Auslenkung kann über Federkraft, motorisch oder pneumatisch erzeugt werden. Anhand der Messung können die Bandspannung oder andere relevante Parameter automatisch oder manuell nachgeführt bzw. geändert werden.

Optional kann aus der Erfassung der Bandspannung auch der Innendruck bzw. die Härte der zu umreifenden Behälter hergeleitet bzw. grob überschlagen werden, was eine zusätzliche Einflussnahme auf weitere Prozessparameter erlaubt, bspw. auf einen einzustellenden Fülldruck oder einen Begasungsdruck etc.

Vorzugsweise wird bei dem erfindungsgemäßen Verfahren die Bandspannung innerhalb eines vorgebbaren Bandabschnittes des Umreifungsbandes gemessen, der sich ungefähr mittig zwischen zwei benachbarten Artikeln des vom Umreifungsband zusammengehaltenen Umreifungsgebindes befindet. Auf diese Weise können reproduzierbare Impulsantworten erwartet und generiert werden, die einen eindeutigen Rückschluss auf die Bandspannung erlauben und deshalb ein eindeutiges Messsignal liefern, das Auskunft über die Umreifungsqualität geben kann.

Um jedes einzelne Gebinde hinsichtlich seiner Bandspannung zu überprüfen, kann die Bandspannung wenigstens eines Umreifungsbandes jedes Umreifungsgebindes einer Folge von nacheinander umreiften und hintereinander transportierten Umreifungsgebinden erfasst und zur Steuerung einer Ausschleuseinrichtung herangezogen werden, was es erlaubt, die betroffenen Umreifungsgebinde aus dem Gebindestrom auszusondern, bei denen eine erfasste Bandspannung außerhalb eines vorgebbaren Sollbereichs liegt. Bei der Erfassung der Impulsantwort wird ermittelt, ob die Beschleunigung innerhalb eines Sollwertbereichs liegt. Ist dies der Fall, handelt es sich um ein einwandfreies Gebinde. Wird der Sollwert verfehlt, kann das Gebinde problemlos aus dem stetigen Förderprozess ausgesondert werden, ohne dass die übrigen Gebinde hierdurch beeinfluss oder deren Transport beeinträchtigt wird. Somit wird in vorteilhafter Weise ein stetiges Messverfahren zur Verfügung gestellt, dass während eines Gebindetransports durchgeführt werden kann. Auf diese Weise können "schlecht umreifte" Gebinde während ihres stetigen Transports ausgesondert und bspw. einer Nachbesserung zugeführt werden.

Weiterhin umfasst die vorliegende Erfindung ein Verfahren zur Erfassung einer Bandspannung eines Umreifungsgebindes, das durch mindestens zwei Artikel oder Behälter gebildet ist, die mit wenigstens einer horizontal um jeweilige Außenseiten der Artikel oder Behälter gespannten, band- oder streifenartigen, geschlossenen Umreifung zusammengehalten und miteinander verbunden sind. Die Umreifung selbst ist durch ein, zwei oder mehr gleichartige oder unterschiedliche Umreifungsbänder aus Kunststoff oder einem Verbundmaterial gebildet, deren Enden mit definierbarer Bandspannung aneinander fixiert sind. Bei dem Verfahren wird die Bandspannung des wenigstens einen Umreifungsbandes der Umreifung durch Erfassung einer Impulsantwort eines auf das Umreifungsband aufgebrachten mechanischen Impulses gemessen und ermittelt. Alle oben genannten Ausführungsvarianten und Verfahrensparameter, die sich auf das erfindungsgemäße Verfahren zur Herstellung eines Umreifungsgebindes beziehen, betreffen gleichermaßen das hier erwähnte Messverfahren.

Zur Erreichung des oben genannten Ziels umfasst die Erfindung zudem eine Vorrichtung zur Herstellung eines Umreifungsgebindes, das mindestens zwei Artikel mit wenigstens einer horizontal um Außenseiten der Artikel gespannten, band- oder streifenartigen, geschlossenen Umreifung zur Verbindung und Fixierung der Artikel aneinander umfasst. Die Vorrichtung umfasst eine Fördereinrichtung zur ununterbrochenen oder zyklischen Förderung von Artikelgruppen zu einer Umreifungseinrichtung, die zur Aufbringung von einem, zwei oder mehr gleichartigen oder unterschiedlichen Umreifungsbändern aus Kunststoff oder einem Verbundmaterial um die Außenseiten der Artikel unter gleichzeitiger Aufbringung einer definierbaren Bandspannung und anschließender Fixierung von Bandenden aneinander zur Herstellung der Umreifung vorbereitet und ausgestattet ist. Zudem umfasst die erfindungsgemäße Vorrichtung eine Messeinrichtung zur Erfassung der Bandspannung, die eine Einrichtung zur Aufbringung eines mechanischen Impulses auf wenigstens ein Umreifungsband der Umreifung sowie eine Einrichtung zur Erfassung einer Impulsantwort auf den mechanischen Impuls aufweist. Diese Einrichtung zur Aufbringung des mechanischen Impulses auf das Umreifungsband kann bspw. einen linear oder rotatorisch beweglichen, mechanisch wirkenden Stößel umfassen, wodurch der mechanische Impuls mittels Druckstoß und/oder durch einen mechanischen Schlag auf das Umreifungsband aufgebracht wird, dessen Impulsantwort erfasst und ausgewertet werden kann. Wie oben erwähnt, muss der Druckstoß nicht zwingend durch mechanische Berührung erfolgen, sondern kann wahlweise auch durch einen Druckstoß, durch Übertragung von Druckwellen in der Luft, durch Schalldruck etc. erzeugt werden.

Die Einrichtung zur Erfassung der Impulsantwort kann bspw. einen Kraftsensor, einen Drucksensor und/oder einen Beschleunigungssensor umfassen, der/die mit einer Auswerteschaltung zur Erfassung und Auswertung der Sensorsignale und zur Herleitung der Bandspannung gekoppelt ist/sind. Die Ausführungsvariante der erfindungsgemäßen Vorrichtung kann zur Durchführung des oben beschriebenen Verfahrens zur Bandspannungsmessung dienen, so dass die dort erläuterten Verfahrensparameter gleichermaßen für die hier in verschiedenen Ausführungsvarianten beschriebene Vorrichtung zur Herstellung von Umreifungsgebinden gelten. Sinnvollerweise sind die Stößel oder Klöppel bzw. die Einrichtungen zur Aufbringung eines Druckstoßes so angeordnet, dass die Bandspannung innerhalb eines vorgebbaren Bandabschnittes des Umreifungsbandes gemessen wird, der sich ungefähr mittig zwischen zwei benachbarten Artikeln des vom Umreifungsband zusammengehaltenen Umreifungsgebindes befindet. Auf diese Weise können reproduzierbare Messergebnisse gewährleistet werden, die bei aufeinander folgenden Gebinden jeweils gleiche Messergebnisse liefern können, sofern die Bandspannungswerte jeweils übereinstimmen.

Die erfindungsgemäße Vorrichtung kann vorteilhaft mit einer steuerbaren Ausschleuseinrichtung gekoppelt sein, die Umreifungsgebinde aus dem Gebindestrom aussondert, bei denen eine erfasste Bandspannung außerhalb eines vorgebbaren Sollbereichs liegt.

Die vorliegende Erfindung umfasst schließlich ein Verfahren zur Erfassung einer Bandspannung von Umreifungsgebinden, die jeweils mindestens zwei Artikel mit wenigstens einer horizontal um Außenseiten der Artikel gespannten, band- oder streifenartigen, geschlossenen Umreifung zur Verbindung und Fixierung der Artikel aneinander umfassen.

Bei dem Verfahren wird ein mechanischer Impuls auf wenigstens ein Umreifungsband der Umreifung aufgebracht sowie eine Impulsantwort auf den mechanischen Impuls erfasst. Hierbei kann der mechanische Impuls auf das Umreifungsband mittels eines linear oder rotatorisch beweglichen, mechanisch wirkenden Stößels erfolgen. Die Einrichtung zur Erfassung der Impulsantwort kann bspw. ein Kraftsensor, ein Drucksensor und/oder ein Beschleunigungssensor sein, der/die mit einer Auswerteschaltung zur Erfassung und Auswertung der Sensorsignale und zur Herleitung der Bandspannung gekoppelt ist/sind.

Es ist eine bekannte Verpackungsart, Flaschen und Flüssigkeitsbehälter wie Getränkebehälter in Formationen von z.B. 2x3 oder 2x2 Flaschen oder Behältern zu gruppieren und mit einem Band zu Gebinden zusammenzuspannen. Die Qualität solcher sog. Umreifungsgebinde bemisst sich an der Spannkraft des Bandes, welches die Flaschen oder Behälter umschließt. Da die häufig verwendeten PET-Behälter relativ dünnwandig und damit nachgiebig sind, ist sowohl eine zu straff gespannte Umreifung aufgrund der mechanischen Belastung der Behälter als auch eine zu schwach gespannte Umreifung aufgrund des ungenügenden Zusammenhaltes der einzelnen Behälter im Gebinde zu vermeiden. Aus diesem Grund schlägt die Erfindung vor, bei einzelnen Gebinden, vorzugsweise jedoch bei allen Gebinden innerhalb eines Förderstroms, die effektive Bandspannung nach der Aufbringung des Gebindes im Interesse einer umfassenden Qualitätskontrolle vor der Endverpackung der Gebinde zu erfassen.

Durch einen Stößel oder Klöppel wird das Band quer zur Transportrichtung oder in Transportrichtung angestoßen, ohne dabei das Gebinde zu verschieben. Letzteres wird durch eine an die Masse des Gebindes angepasste Masse und/oder Stoßkraft des Stößels oder Klöppels erreicht. Die Verzögerung des Stößels oder Klöppels am Band wird gemessen. Je härter das Band gespannt ist, desto höher der Verzögerungswert (in m/s²). Aus der Verzögerung des Stößels oder Klöppels kann die Bandspannung ermittelt werden. Die Verzögerung kann bspw. sensorisch mit verschiedenen Mitteln erfasst werden. So können sich Halbleiterbeschleunigungssensoren oder Festkörpermikrofone zur Erfassung der Impulsantworten eignen. Auch eine Wegerfassung über die Zeit und anschließender zweimaliger Differentiation in der Steuerung ist möglich. Wahlweise können die Stößel oder Klöppel linear oder rotatorisch arbeiten. Die Auslenkung kann über Federkraft, motorisch oder pneumatisch erfolgen. Anhand der Messung kann die Bandspannung oder andere relevante Parameter automatisch oder manuell nachgeführt bzw. geändert werden. Wahlweise kann hierbei auch der Innendruck bzw. die Härte der zu umreifenden Flasche bzw. der Behälter erfasst bzw. grob überschlagen werden, woraus weitere Prozessparameter beeinflusst werden können.

Der im Zusammenhang der Erfindung verwendete Begriff der Impulsantwort ist umfassend zu verstehen. Mit einer erfindungsgemäßen Impulsantwort ist eine direkte Erfassung einer Rückwirkung auf einen mechanisch wirkenden Stößel, Klöppel, Hammer o. dgl. gemeint sein, da dieser Stößel, Klöppel oder Hammer das Umreifungsband nicht nur auslenkt, sondern auch je nach Bandspannung auch eine Reaktion auf die erfolgte Auslenkung erfährt. Diese Reaktion kann sich bspw. in einem Zurückspringen oder Abprallen bemerkbar machen, was sich wiederum mittels geeigneter Beschleunigungssensoren erfassen lässt, die bspw. innerhalb der Stößel angeordnet oder mit diesen gekoppelt sein können. Solche Sensoren dienen dazu, die Beschleunigung, die der Stößel bei seinem Aufprall auf das Umreifungsband erfährt, zu messen und ein entsprechendes Messsignal zu erzeugen. Letztlich wird auf diese Weise die beschleunigende und/oder verzögernde Wirkung des zurückschwingenden Bandes auf den Stößel, Klöppel, Hammer o. dgl. gemessen. Nicht erfindungsgemäß kann die Impulsantwort jedoch auch in einer Schwingungsanregung der umgebenden Luft oder in einer Schallanregung bestehen, die ebenfalls gemessen werden kann. Die Schwingungsmessung der Luftschwingungen und/oder Schallschwingungen erfolgen jedoch normalerweise berührungslos, was einer indirekten Messung der Impulsantwort durch den Aufprall des Stößels, Klöppels, Hammers o. dgl. entspricht. Die Schwingungsanregung, Schallerzeugung oder auch die direkte Verzögerung bzw. der direkte mechanische Einfluss auf den Stößel, Klöppel oder Hammer können sensorisch mit verschiedenen Mitteln erfasst werden. z.B. mit geeigneten Beschleunigungssensoren, Festkörpermikrofonen oder auf andere Weise.

Zusammenfassend sei nochmals darauf hingewiesen, dass der Begriff der Impulsantwort auch durch den Begriff der Beschleunigungsreaktion, der Verzögerung des mechanisch wirkenden Schlag- oder Auslenkungselements ersetzt werden könnte.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht eines Umreifungsgebindes mit insgesamt sechs mittels eines Umreifungsbandes zusammengehaltenen Behältern.
Fig. 2 zeigt eine Seitenansicht eines Umreifungsgebindes.
Fig. 3 zeigt eine schematische Darstellung einer Messanordnung zur Messung einer Bandspannung der Umreifung.
Fig. 4 zeigt in vier schematischen Ansichten (Fig. 4a bis Fig. 4d) jeweils aufeinander folgende Prozessschritte eines Messvorganges zur Erfassung der Bandspannung.
Fig. 5 zeigt eine Ausführungsvariante der Messanordnung mit einem linear beweglichen Stößel zur Aufbringung eines Druckimpulses.
Fig. 6 zeigt eine alternative Ausführungsvariante der Messanordnung mit einem rotatorisch beweglichen Schwenkhebel zur Aufbringung eines Druckimpulses.
Fig. 7 zeigt eine Ausführungsvariante einer erfindungsgemäßen Vorrichtung zur Herstellung von Umreifungsgebinden mit einer Messanordnung zur Erfassung der Bandspannung der Umreifungsgebinde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Bei den nachfolgend beschriebenen Umreifungsgebinden 10 bzw. den nachfolgend beschriebenen Verkaufseinheiten sind jeweils mehrere Artikel 12 zu Gebinden 10 zusammengefasst. Die Artikel 12 sind hierbei jeweils durch Getränkebehälter 14 gebildet. zusammengefasst. Die Gebinde 10 werden durch Umreifen der Behälter 14 mit Hilfe von flexiblen Bändern aus Kunststoff oder aus anderen Materialien, insbesondere aus PP oder PET gebildet. Grundsätzlich sind mit der aufgezeigten Verbindungsart "Behälterumreifen" alle denkbaren geometrischen Anordnungen der Behälter 14 möglich: Lineare Matrixanordnung in einer n x m- Anordnung von Zeilen und Spalten für runde oder rechteckige, quadratische oder andere Behälter sowie z.B. Kugelpackungen im 30°- bzw. 60°-Winkel bei runden Behältern 14 in beliebiger Anzahl. Die Anordnung der Gebinde 10 und ihrer Artikel 12 oder Behälter 14 ist abhängig von der Zuführung der Behälter 14 und deren Einteilung durch sog. Behältereinteiler innerhalb eines hier nicht näher ausgeführten Zuführabschnittes.

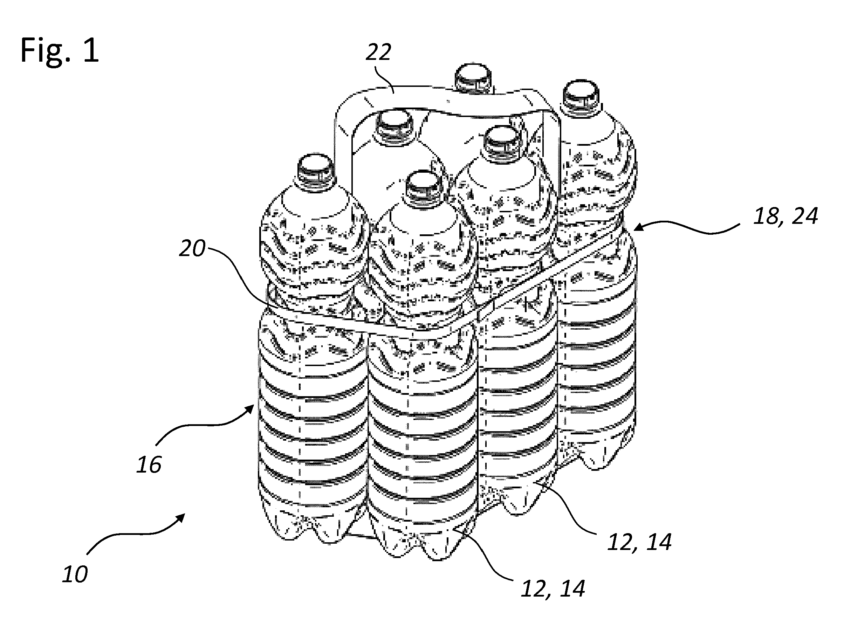

Die Fig. 1 zeigt eine perspektivische Ansicht eines solchen Umreifungsgebindes 10. Bei der Gebindeanordnung sind die Artikel 12 bzw. Behälter 14 nebeneinander in einer sog. Längsformation angeordnet. Das Gebinde 10 setzt sich im vorliegenden Beispiel aus sechs miteinander verbundenen PET-Behältern 14 zusammen, die mit einer horizontal um eine Außenseite 16 der PET-Behälter 14 gespannten, band- oder streifenartigen Umreifung 18 zusammengehalten sind. Die Umreifung 18 ist durch ein flaches Umreifungsband 20 aus Kunststoff gebildet, das um die Artikel 12 bzw. Behälter 14 gespannt und mit seinen überlappenden freien Enden unter Aufbringung einer Vorspannung fixiert ist. Die Umreifung 18 bzw. das Umreifungsband 20 ist an der Kontaktstelle mittels einer stoffschlüssigen Verbindung, bspw. in Form wenigstens einer Schweißverbindung oder einer Klebeverbindung fixiert. Wahlweise kann zudem ein schlaufenartiger Tragegriff 22 vorgesehen sein, der die Oberseiten des Gebindes 10 in schräger bzw. diagonaler Richtung überspannt. Im gezeigten Ausführungsbeispiel ist die Umreifung 18 in einem oberen Bereich um die Behälter 14 gespannt und liegt in einer sog. Griffmulde 24, durch welche die Behälter 14 tailliert sind.

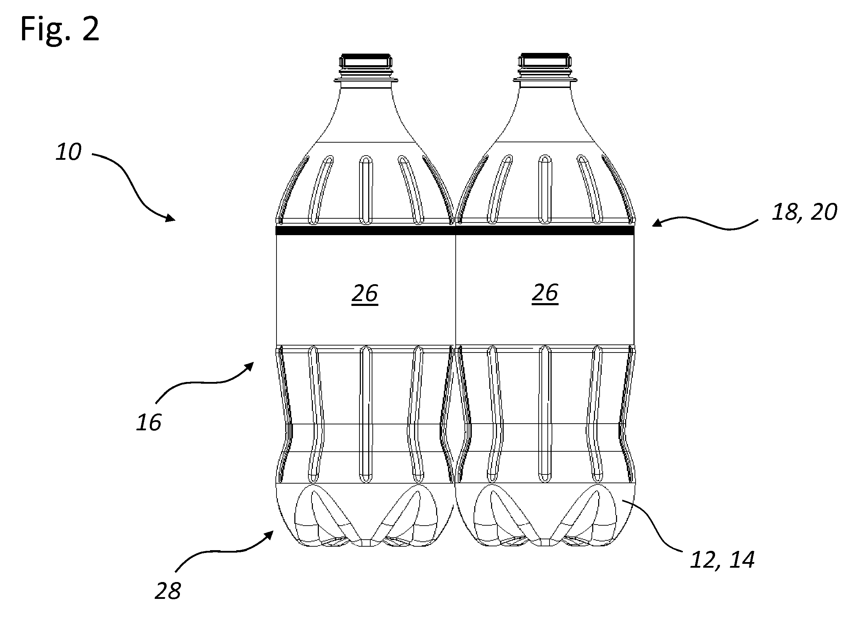

Wie es die schematische Seitenansicht der Fig. 2 zeigt, kann die Umreifung 18 wahlweise durch ein einziges Umreifungsband 20 gebildet sein, das im Bereich von verbreiterten Mittelabschnitten 26 der Behälter 14 in horizontalem Verlauf um deren Außenseiten 16 gespannt und unter definierter Vorspannung - nachfolgend auch als Bandspannung bezeichnet - fixiert wurde, wodurch das Umreifungsgebinde 10 gemäß Fig. 2 gebildet ist. Wahlweise können die Behälter 14 jeweils im unteren Bereich, knapp oberhalb des Bodenbereichs 28, einen verbreiterten Außendurchmesser aufweisen, der dem Außenumfang im verbreiterten Mittelabschnitt 26 entsprechen kann, so dass die Behälter 14 bei gespanntem Umreifungsband 20 jeweils stabil mit jeweils vertikal orientierten Längserstreckungsrichtungen fixiert sind.

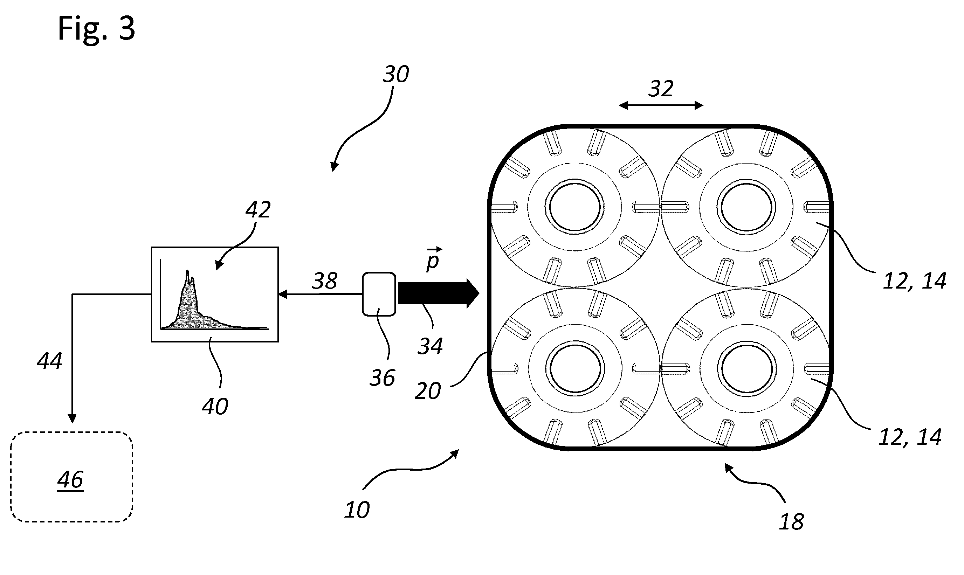

Die schematische Darstellung der Fig. 3, die ein 2x2-Gebinde 10 mit insgesamt vier Behältern 14 bzw. Artikeln 12 in einer Draufsicht von oben zeigt, verdeutlicht gleichermaßen die wesentlichen Komponenten der erfindungsgemäßen Messanordnung 30, die der Erfassung einer Bandspannung 32 am Umreifungsgebinde 10 dient. Die Messanordnung 30 umfasst eine hier durch einen senkrecht auf das Umreifungsband 20 gerichteten Pfeil angedeutete Einrichtung 34 zur Aufbringung eines mechanischen Impulses (p) auf das Umreifungsband 20 der Umreifung 18, die nachfolgend auch als Impulserzeugereinheit 34 bezeichnet wird. Der Impulserzeugereinheit 34 ist eine Einrichtung 36 zur Erfassung einer Impulsantwort zugeordnet, die insbesondere durch eine geeignete Sensoreinheit wie bspw. einen Beschleunigungssensor, Drucksensor oder Kraftsensor gebildet sein kann, dessen Sensorsignale 38 an eine Auswerteeinrichtung 40 übermittelt werden, die wahlweise über eine Anzeigeeinrichtung 42 verfügt, vorzugsweise jedoch Steuersignale 44 generiert, um weitere, hier nicht dargestellte Maschinenkomponenten 46 anzusteuern, die bspw. für eine Ausschleusung oder Aussonderung von solchen Umreifungsgebinden 10 sorgen können, deren Bandspannung 32 von der Auswerteeinrichtung 40 als unzureichend oder als zu hoch erkannt und klassifiziert wurde.

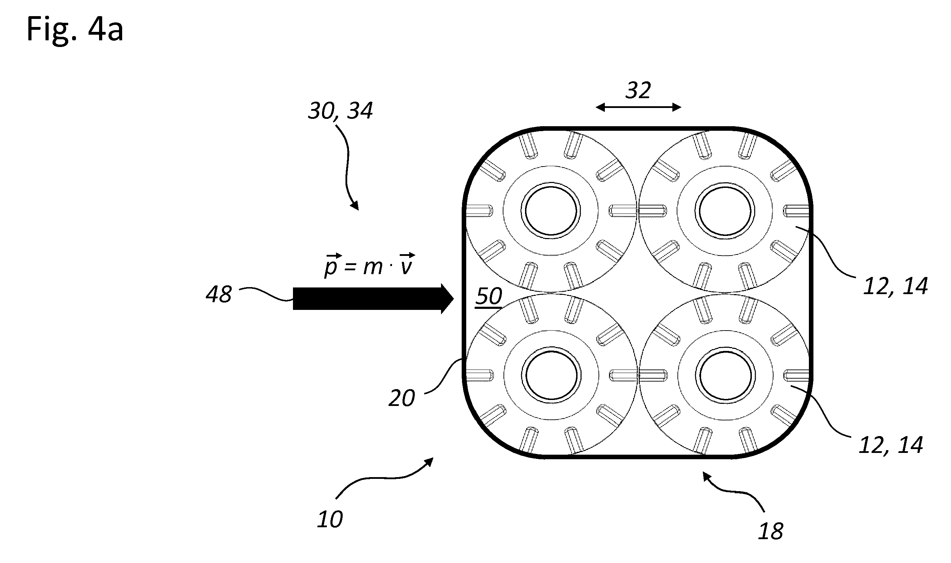

Die schematischen Darstellungen der Figuren 4a bis 4d zeigen in aufeinander folgenden Verfahrensschritten die Funktionsweise der Messanordnung 30 zur Gewinnung von Messwerten über die Bandspannung 32 des Umreifungsbandes 20, das um die Artikel 12 bzw. Behälter 14 des Umreifungsgebindes 10 gespannt ist. In der Darstellung der Fig. 4a wird die Impulserzeugereinheit 34, die bspw. durch einen linear beweglichen Stößel 48 gebildet sein kann, mit einer gegebenen Geschwindigkeit v in Richtung des Umreifungsbandes 20 bewegt, und zwar in senkrechter Richtung und in einer Position, die annähernd der Mitte zwischen zwei benachbarten Artikeln 12 oder Behältern 14 entspricht, wo die Umreifung 18 nicht an den Außenseiten 16 der Behälter 14 anliegt, sondern über einen Zwischenraum 50 gespannt ist. Der Impuls, mit dem die Impulserzeugereinheit 34 bzw. der Stößel 48 in senkrechter Richtung auf das gespannte Umreifungsband 20 bewegt wird, ist aus dem Produkt der Geschwindigkeit v und der effektiven Masse m des Stößels 48 gebildet.

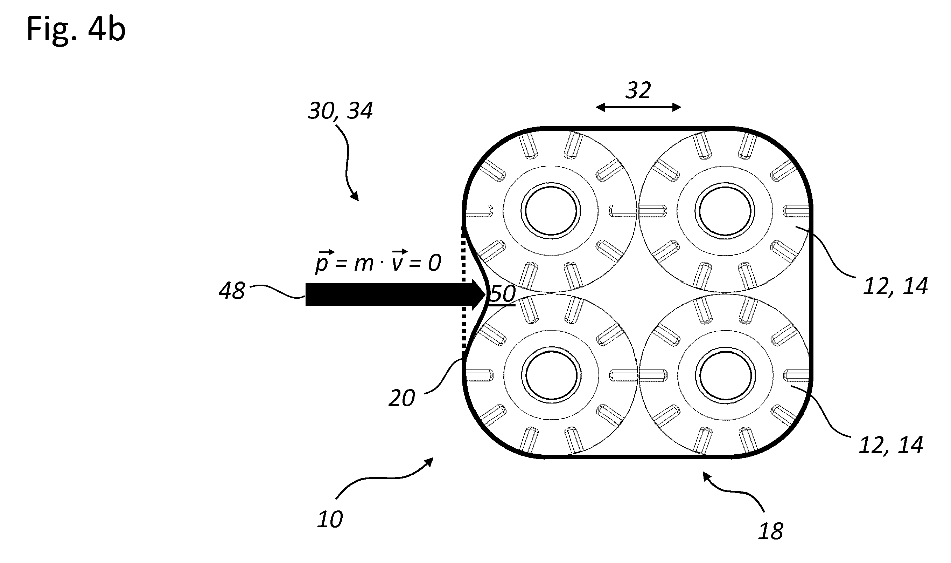

Der in der schematischen Draufsicht der Fig. 4b angedeutete Zeitpunkt des Auftreffens des Stößels 48 auf das Umreifungsband 20 im Bereich des Zwischenraumes 50 ist charakterisiert durch eine starke Verzögerung des Stößels 48 bis zur Geschwindigkeit Null (v = 0) und dem gleichzeitigen Nachgeben des Umreifungsbandes 20, dessen Bandspannung 32 gleichzeitig leicht erhöht wird. Der Impuls p des Stößels 48 wird dadurch in die erhöhte Bandspannung 32 des Umreifungsbandes 20 umgewandelt. Der Impuls p wird dadurch ebenfalls zu Null (p = 0), was dem kurzzeitigen Stillstand des Stößels 48 entspricht.

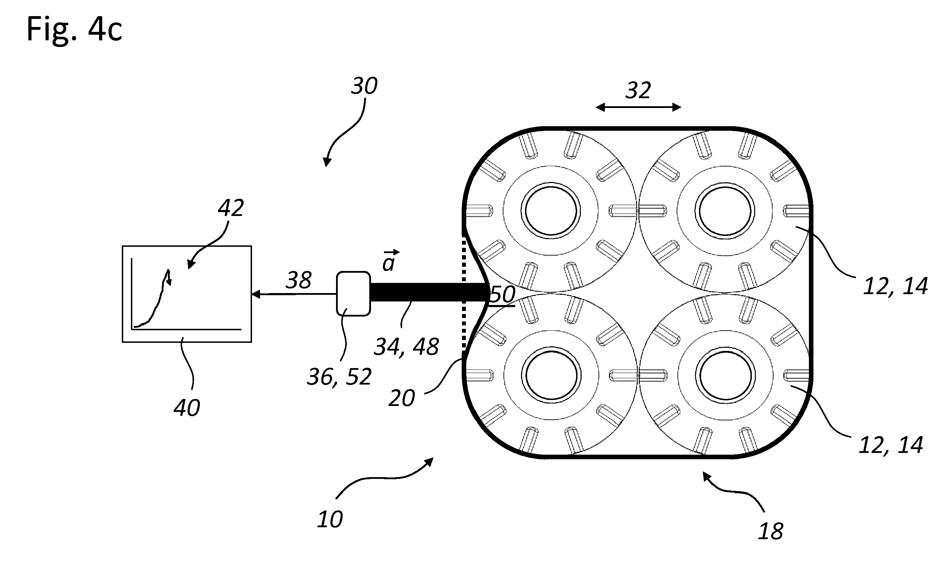

Grundsätzlich gilt, dass der Verzögerungswert a (in m/s²) für den Stößel 48 umso größer ist, je härter das Band 20 gespannt ist. Aus der gemessenen Verzögerung a des Stößels 48 bzw. aus der Impulsantwort kann die effektive Bandspannung 32 errechnet werden. Hierzu wird gemäß Fig. 4c das Ausgangssignal 38 der mit dem Stößel 48 wirkverbundenen Einrichtung 36 zur Erfassung der Impulsantwort erfasst und in der Messanordnung 30 verarbeitet. Hierzu wird die die Verzögerung a des Stößels 48 bei dessen Auftreffen auf das straff gespannte Umreifungsband 20 mittels der als Beschleunigungssensor 52 ausgebildeten und vorzugsweise fest mit dem Stößel 48 verbundenen Einrichtung 36 erfasst und das daraus generierte Ausgangssignal 38 an die Auswerteeinrichtung 40 übermittelt. Das mit der Anzeigeeinrichtung 42 beispielhaft visualisierte Ausgangssignal 38 kann einen Wert anzeigen, dessen Amplitude eine Aussage über die effektive Bandspannung 32 liefern kann.

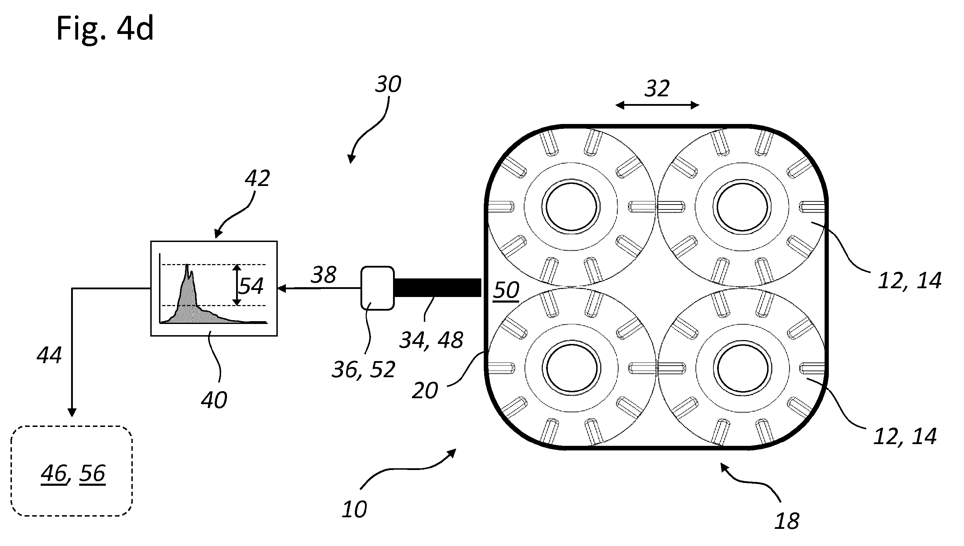

Nach Beendigung der Messung, Erfassung der Bandspannung 32 und erfolgter Auswertung des Ausgangssignals 38 des Beschleunigungssensors 52 am Stößel 48 kann gemäß Fig. 4d ein geeignetes Steuersignal 44 zur Ansteuerung der mit der Bezugsziffer 46 bezeichneten weiteren Maschinenkomponente 46 generiert werden. Sofern die durch Auswertung des Ausgangssignals 38 gemessene Bandspannung 32 nicht innerhalb eines definierten Sollwertbereichs 54 liegt, der durch zwei horizontale Linien im Bereich der Anzeigeeinrichtung 42 angedeutet ist, ist die Bandspannung 32 entweder unzureichend oder zu hoch, was beides einen Qualitätsmangel des betroffenen Umreifungsgebindes 10 anzeigt. Sofern das gemessene Signal außerhalb des vorgebbaren Sollwertbereichs 54 liegt, kann das Steuersignal 44 bspw. zur Ansteuerung eines geeigneten, hier nicht näher dargestellten Schiebers 56 oder anderen Aktors, mit dem das betroffene Gebinde 10 aus dem Förderstrom einer Mehrzahl von hintereinander transportierten Gebinden 10 ausgesondert bzw. ausgeschleust werden kann.

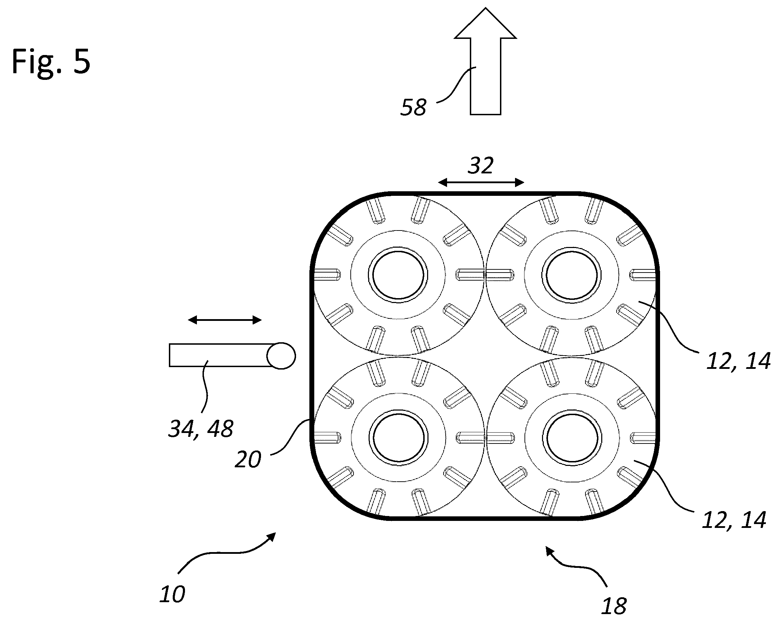

Die schematische Draufsicht der Fig. 5 verdeutlicht die bereits zuvor gezeigte Variante zur Bandspannungsmessung, bei der die Einrichtung 34 zur Aufbringung eines Impulses auf die Umreifung 18 durch einen linear und senkrecht zur Oberfläche des Umreifungsbandes 20 beweglichen Stößel 48 gebildet ist, der mit einem hier nicht dargestellten Kraft-, Druck- oder Beschleunigungssensor in einer Weise gekoppelt ist, dass dieser Sensor die Impulsantwort bzw. die Verzögerung an der straff gespannten Umreifung 18 erfassen und daraus ein Ausgangssignal generieren kann, aus dem die Bandspannung 32 errechnet wird (vgl. Fig. 3). Die Transportrichtung 58, in der eine Vielzahl von gleichartigen Gebinden 10 in einem ununterbrochenen Förderstrom transportiert werden, während die Bandspannung 32 mit der Einrichtung 34 bzw. dem Stößel 48 gemessen wird, ist durch einen nach oben gerichteten Pfeil beispielhaft angedeutet.

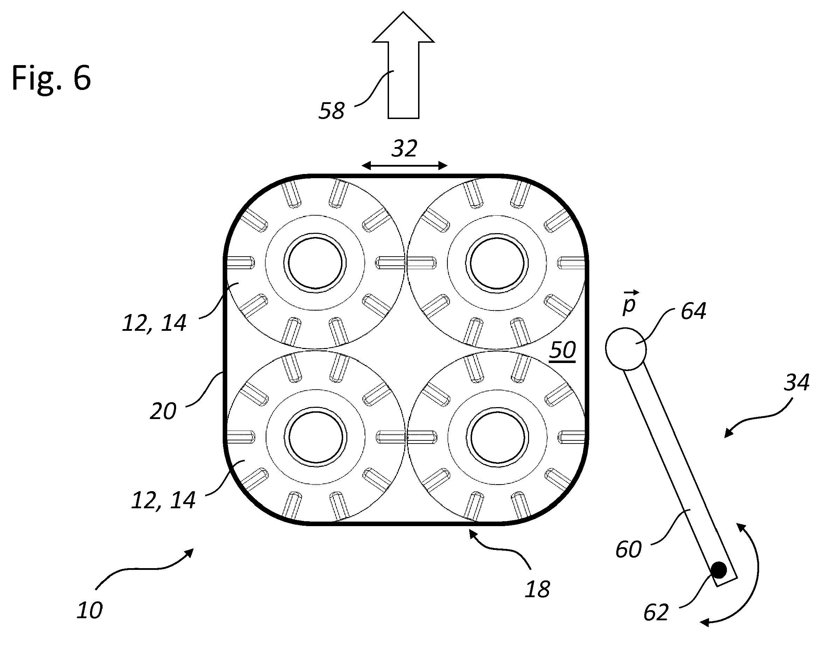

Die schematische Draufsicht der Fig. 6 verdeutlicht eine alternative Ausführungsvariante zur Bandspannungsmessung, bei der die Einrichtung 34 zur Aufbringung eines Impulses auf die Umreifung 18 durch einen rotatorisch und senkrecht zur Oberfläche des Umreifungsbandes 20 beweglichen Schwenkhebel 60 gebildet ist, der mit einem hier nicht dargestellten Kraft-, Druck- oder Beschleunigungssensor in einer Weise gekoppelt ist, dass dieser Sensor die Impulsantwort bzw. die Verzögerung an der straff gespannten Umreifung 18 erfassen und daraus ein Ausgangssignal generieren kann, aus dem die Bandspannung 32 errechnet wird (vgl. Fig. 3). Auch hier ist die Transportrichtung 58 durch einen nach oben gerichteten Pfeil beispielhaft angedeutet. Der Schwenkhebel 60 kann in Art eines Schlaghammers mit definierter Beschleunigung bzw. Drehgeschwindigkeit um einen festen Drehpunkt 62 verschwenkt werden, so dass ein Hammerkopf 64 oder Klöppel an seinem Ende mit definiertem Impuls p auf die Oberfläche des Umreifungsbandes 20 auftreffen kann, und zwar vorzugsweise mittig im Bereich des Zwischenraumes 50 zwischen zwei benachbarten Behältern 14, wie dies durch die Fig. 6 angedeutet ist.

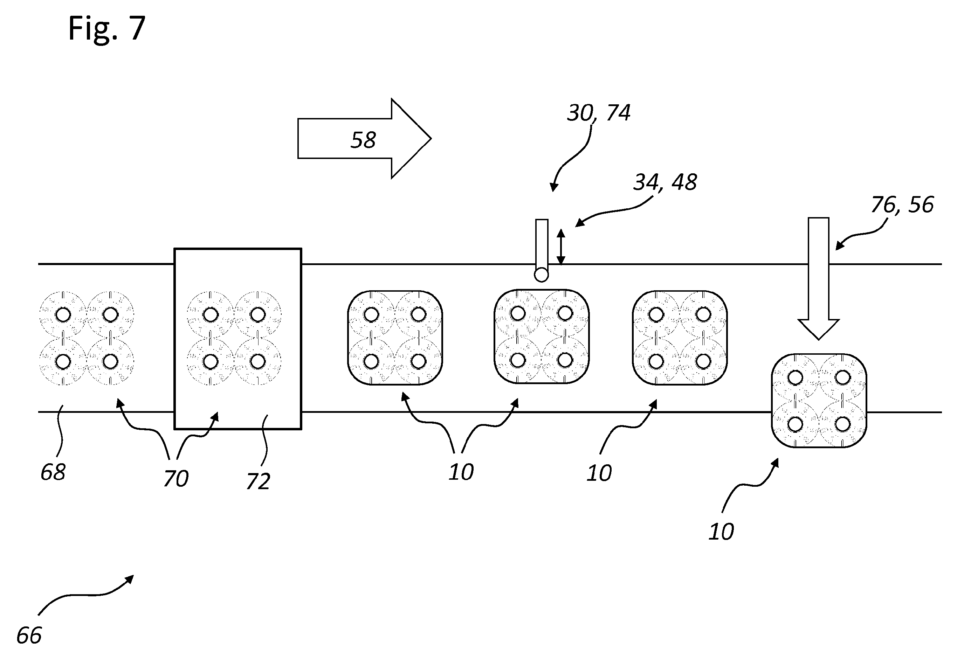

Die schematische Darstellung der Fig. 7 zeigt die wichtigsten Komponenten einer Vorrichtung 66 zur Herstellung von Umreifungsgebinden 10, wie sie zuvor beschrieben wurden. Die Vorrichtung umfasst eine Fördereinrichtung 68 zur ununterbrochenen oder zyklischen Förderung von Artikel- oder Behältergruppen 70 in Transportrichtung 58 zu einer Umreifungseinrichtung 72, die zur Aufbringung von einem, zwei oder mehr gleichartigen oder unterschiedlichen Umreifungsbändern 20 um die Außenseiten der Artikel- oder Behältergruppen 70 unter gleichzeitiger Aufbringung einer definierbaren Bandspannung und anschließender Fixierung von Bandenden aneinander zur Herstellung der Umreifung 18 vorgesehen und ausgestattet ist. In Transportrichtung 58 schließt sich an die Umreifungseinrichtung 72 eine oben im Zusammenhang mit der Messanordnung 30 erwähnte Messeinrichtung 74 zur Erfassung der Bandspannung an, welche die erwähnte Einrichtung 34 zur Aufbringung eines mechanischen Impulses auf das Umreifungsband 20 der Umreifung 18 des Gebindes 10 sowie eine Einrichtung 36 zur Erfassung einer Impulsantwort auf den mechanischen Impuls aufweist. Im gezeigten Ausführungsbeispiel der Fig. 7 ist die Einrichtung 34 durch einen linear beweglichen Stößel 48 (vgl. Fig. 5) gebildet; sie kann jedoch wahlweise auch einen Schwenkhebel gemäß Fig. 6 aufweisen oder auf andere Weise ausgebildet sein.

Das in Fig. 7 gezeigte Ausführungsbeispiel der Vorrichtung 66 zeigt weiterhin eine steuerbare Ausschleuseinrichtung 76, die einen Schieber 56 (vgl. Fig. 4d) umfasst, der solche Gebinde 10 aus dem Förderstrom aussondert, deren Bandspannung 32 nicht innerhalb des vorgegebenen Sollwertbereichs 54 liegt. Das Ausschieben eines solchen Gebindes 10 kann bspw. senkrecht zur Transportrichtung 58, wahlweise jedoch auch in andere Richtung erfolgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Gebinde, Umreifungsgebinde
- 12: Artikel
- 14: Behälter, PET-Behälter
- 16: Außenseite
- 18: Umreifung
- 20: Umreifungsband
- 22: Tragegriff
- 24: Griffmulde
- 26: Mittelabschnitt
- 28: Bodenbereich
- 30: Messanordnung
- 32: Bandspannung
- 34: Einrichtung zur Aufbringung eines mechanischen Impulses, Impulserzeugereinheit
- 36: Einrichtung zur Erfassung einer Impulsantwort
- 38: Sensorsignale
- 40: Auswerteeinrichtung
- 42: Anzeigeeinrichtung
- 44: Steuersignale
- 46: Maschinenkomponenten
- 48: Stößel
- 50: Zwischenraum (zwischen benachbarten Behältern)
- 52: Beschleunigungssensor
- 54: Sollwertbereich (Umreifungsspannung)
- 56: Schieber
- 58: Transportrichtung (der Gebinde)
- 60: Schwenkhebel
- 62: Drehpunkt
- 64: Hammerkopf
- 66: Vorrichtung zur Herstellung von Umreifungsgebinden
- 68: Fördereinrichtung
- 70: Behältergruppe, Artikelgruppe
- 72: Umreifungseinrichtung
- 74: Messeinrichtung
- 76: Ausschleuseinrichtung

- a: Beschleunigung, Verzögerung
- m: Masse (des Stößels)
- p: Impuls
- v: Geschwindigkeit (des Stößels)

## Patentansprüche

1. Verfahren zur Herstellung eines Umreifungsgebindes (10), bei dem mindestens zwei Artikel (12) oder Behälter (14) mit wenigstens einer horizontal um jeweilige Außenseiten der Artikel (12) oder Behälter (14) gespannten, band- oder streifenartigen, geschlossenen Umreifung (18) zusammengehalten und miteinander verbunden werden, welche Umreifung (18) durch ein, zwei oder mehr gleichartige oder unterschiedliche Umreifungsbänder (20) aus Kunststoff oder einem Verbundmaterial gebildet werden, deren Enden unter Aufbringung einer definierbaren Bandspannung (32) aneinander fixiert werden, wonach die Bandspannung (32) des wenigstens einen Umreifungsbandes (20) der Umreifung (18) durch Erfassung einer Impulsantwort eines auf das Umreifungsband (20) aufgebrachten mechanischen Impulses (p) erfasst wird, wobei der Impuls (p) durch einen mechanisch wirkenden Stößel, Klöppel, Hammer o. dgl. aufgebracht wird und wobei die Impulsantwort als direkte Rückwirkung auf den Stößel, Klöppel, Hammer o. dgl. erfasst wird.

2. Verfahren nach Anspruch 1, bei dem der mechanische Impuls (p) durch einen Druckstoß und/oder durch einen mechanischen Schlag auf das Umreifungsband (20) aufgebracht wird, dessen Impulsantwort erfasst und ausgewertet wird.

3. Verfahren nach Anspruch 1 oder 2, bei dem die Impulsantwort mit einem Kraftsensor, einem Drucksensor und/oder einem Beschleunigungssensor (52) erfasst wird, dessen/ deren Sensorsignale (38) zur Erfassung der Bandspannung (32) ausgewertet wird/ werden.

4. Verfahren nach einem der Ansprüche 1 bis 3, bei dem die Bandspannung (32) innerhalb eines vorgebbaren Bandabschnittes des Umreifungsbandes (20) gemessen wird, der sich ungefähr mittig zwischen zwei benachbarten Artikeln (12) oder Behältern (14) des von der Umreifung (18) zusammengehaltenen Umreifungsgebindes (10) befindet.

5. Verfahren nach einem der Ansprüche 1 bis 4, bei dem die Bandspannung (32) wenigstens eines Umreifungsbandes (20) jedes Umreifungsgebindes (10) einer Folge von nacheinander umreiften und hintereinander transportierten Umreifungsgebinden (10) erfasst und zur Steuerung einer Ausschleuseinrichtung (46, 56) herangezogen werden, die solche Umreifungsgebinde (10) aus dem Gebindestrom aussondert, bei denen eine erfasste Bandspannung (32) außerhalb eines vorgebbaren Sollwertbereichs (54) liegt.

6. Vorrichtung (66) zur Herstellung eines Umreifungsgebindes (10), das mindestens zwei Artikel (12) oder Behälter (14) mit wenigstens einer horizontal um Außenseiten der Artikel (12) oder Behälter (14) gespannten, band- oder streifenartigen, geschlossenen Umreifung (18) zur Verbindung und Fixierung der Artikel (12) oder Behälter (14) aneinander umfasst, mit einer Fördereinrichtung (68) zur ununterbrochenen oder zyklischen Förderung von Artikel- oder Behältergruppen (70) zu einer Umreifungseinrichtung (72), die zur Aufbringung von einem, zwei oder mehr gleichartigen oder unterschiedlichen Umreifungsbändern (20) aus Kunststoff oder einem Verbundmaterial um die Außenseiten (16) der Artikel (12) oder Behälter (14) unter gleichzeitiger Aufbringung einer definierbaren Bandspannung (32) und anschließender Fixierung von Bandenden aneinander zur Herstellung der Umreifung (18) vorbereitet und ausgestattet ist, und mit einer Messeinrichtung (74) zur Erfassung der Bandspannung (32), die eine Einrichtung (34), umfassend einen mechanisch wirkenden Stößel, Klöppel, Hammer o. dgl., zur Aufbringung eines mechanischen Impulses (p) auf wenigstens ein Umreifungsband (20) der Umreifung (18) sowie eine Einrichtung (36) zur Erfassung einer Impulsantwort auf den mechanischen Impuls (p) als direkte Rückwirkung auf den Stößel, Klöppel, Hammer o. dgl. aufweist.

7. Vorrichtung nach Anspruch 6, bei der die Einrichtung (34) zur Aufbringung des mechanischen Impulses (p) auf das Umreifungsband (20) einen linear oder rotatorisch beweglichen, mechanisch wirkenden Stößel (48) umfasst.

8. Vorrichtung nach Anspruch 6 oder 7, bei der die Einrichtung (36) zur Erfassung der Impulsantwort einen Kraftsensor, einen Drucksensor und/oder einen Beschleunigungssensor (52) umfasst, der/die mit einer Auswerteschaltung (40) zur Erfassung und Auswertung der Sensorsignale (38) und zur Herleitung der Bandspannung (32) gekoppelt ist/sind.

9. Vorrichtung nach einem der Ansprüche 6 bis 8, die mit einer steuerbaren Ausschleuseinrichtung (76) gekoppelt ist, die solche Umreifungsgebinde (10) aus dem Gebindestrom aussondert, bei denen eine erfasste Bandspannung (32) außerhalb eines vorgebbaren Sollwertbereichs (54) liegt.

10. Verfahren zur Erfassung einer Bandspannung (32) eines Umreifungsgebindes (10), das mindestens zwei Artikel (12) oder Behälter (14) umfasst, die mit wenigstens einer horizontal um jeweilige Außenseiten der Artikel (12) oder Behälter (14) gespannten, band- oder streifenartigen, geschlossenen Umreifung (18) zusammengehalten und miteinander verbunden sind, welche Umreifung (18) durch ein, zwei oder mehr gleichartige oder unterschiedliche Umreifungsbänder (20) aus Kunststoff oder einem Verbundmaterial gebildet ist, deren Enden mit definierbarer Bandspannung (32) aneinander fixiert sind, wobei die Bandspannung (32) des wenigstens einen Umreifungsbandes (20) der Umreifung (18) durch Erfassung einer Impulsantwort eines auf das Umreifungsband (20) aufgebrachten mechanischen Impulses (p) erfasst wird, wobei der Impuls (p) durch einen mechanisch wirkenden Stößel, Klöppel, Hammer o. dgl. aufgebracht wird und wobei die Impulsantwort als direkte Rückwirkung auf den Stößel, Klöppel, Hammer o. dgl. erfasst wird.

## Claims

1. A method for producing a strapped bundle (10) in which at least two articles (12) or containers (14) are held together and connected to each other by at least one band- or strip-type, closed strapping (18), which is tensioned horizontally around respective outer sides of the articles (12) or containers (14), which strapping (18) is formed by one, two or more strapping bands (20) of the of the same type or of different types made of plastic or of a composite material, the ends of which strapping bands (20) are fixed to each other under application of a definable strap tension (32), whereupon the strap tension (32) of the at least one strapping band (20) of the strapping (18) is detected by way of detecting an impulse response of a mechanical impulse (p), which is applied to the strapping band (20), wherein the impulse (p) is applied by means of a mechanically acting plunger, bobbin, hammer or the like, and wherein the impulse response is detected as a direct retroaction to the plunger, bobbin, hammer or the like.

2. The method as recited in claim 1 in which the mechanical impulse (p) is applied by way of a pressure surge and/or by way of a mechanical impact to the strapping band (20), the impulse response of which is detected and evaluated.

3. The method as recited in claim 1 or 2 in which the impulse response is detected by a force sensor, a pressure sensor and/or an acceleration sensor (52), the sensor signals (38) of which are evaluated for the detection of the strap tension (32).

4. The method as recited in one of the claims 1 to 3 in which the strap tension (32) is measured within a specifiable band section of the strapping band (20), which band section is situated approximately centrally between two adjacent articles (12) or containers (14) of the strapped bundle (10) that is held together by the strapping (18).

5. The method as recited in one of the claims 1 to 4 in which the strap tension (32) of at least one strapping band (20) of each strapped bundle (10) of a series of successively strapped and consecutively transported strapped bundles (10) is detected and used for controlling a discharge device (46, 56), which removes such strapped bundles (10) from the stream of bundles for which a detected strap tension (32) is outside a specifiable set point range (54).

6. An apparatus (66) for producing a strapped bundle (10), which comprises at least two articles (12) or containers (14) with at least one band- or strip-type, closed strapping (18) for connecting and fixing the articles (12) or containers (14) to each other, which strapping (18) is tensioned horizontally around outer sides of the articles (12) or containers (14), which apparatus has a conveying device (68) for the continuous or cyclic conveyance of article groups or container groups (70) to a strapping device (72), which is prepared and equipped for applying one, two or more strapping bands (20) of the same type or of different types made of plastic or of a composite material around the outer sides (16) of the articles (12) or containers (14) under simultaneous application of a definable strap tension (32) and subsequent fixation of band ends to each other for the purpose of producing the strapping (18), and which apparatus has a measuring device (74) for detecting the strap tension (32), which measuring device (74) has a device (34) comprising a mechanically acting plunger, bobbin, hammer or the like for applying a mechanical impulse (p) to at least one strapping band (20) of the strapping (18), as well as having a device (36) for detecting an impulse response to the mechanical impulse (p) as a direct retroaction to the plunger, bobbin, hammer or the like.

7. The apparatus as recited in claim 6 in which the device (34) for applying the mechanical impulse (p) to the strapping band (20) comprises a linearly or rotatorily movable, mechanically acting plunger (48).

8. The apparatus as recited in claim 6 or 7 in which the device (36) for detecting the impulse response comprises a force sensor, a pressure sensor and/or an acceleration sensor (52), which is/are coupled with an evaluation circuit (40) for detecting and evaluating the sensor signals (38) and for deriving the strap tension (32).

9. The apparatus as recited in one of the claims 6 to 8 which is coupled with a controllable discharge device (76), which removes such strapped bundles (10) from the stream of bundles for which a detected strap tension (32) is outside a specifiable set point range (54).

10. A method for detecting a strap tension (32) of a strapped bundle (10), which comprises at least two articles (12) or containers (14), which are held together and connected to each other by at least one band- or strip-type, closed strapping (18), which is tensioned horizontally around respective outer sides of the articles (12) or containers (14), which strapping (18) is formed by one, two or more strapping bands (20) of the same type or of different types made of plastic or of a composite material, the ends of which strapping bands (20) are fixed to each other at a definable strap tension (32), wherein the strap tension (32) of the at least one strapping band (20) of the strapping (18) is detected by way of detecting an impulse response of a mechanical impulse (p), which is applied to the strapping band (20), wherein the impulse (p) is applied by means of a mechanically acting plunger, bobbin, hammer or the like, and wherein the impulse response is detected as a direct retroaction to the plunger, bobbin, hammer or the like.

## Revendications

1. Procédé de réalisation d'un multipack à cerclage (10), dans lequel au moins deux articles (12) ou récipients (14) sont maintenus ensemble et reliés entre eux par l'intermédiaire d'au moins un cerclage (18) fermé de type bande ou ruban qui est tendu horizontalement autour de faces extérieures respectives des articles (12) ou récipients (14), ledit cerclage (18) étant formé par une, deux ou plusieurs bandes de cerclage (20) similaires ou différentes en matière plastique ou en un matériau composite dont les extrémités sont fixées les unes sur les autres en appliquant une tension de bande (32) définissable, ce après quoi la tension de bande (32) de ladite au moins une bande de cerclage (20) du cerclage (18) est détectée en détectant une réponse impulsionnelle d'une impulsion mécanique (p) appliquée à la bande de cerclage (20), dans lequel l'impulsion (p) est appliquée au moyen d'un poussoir, battant, marteau ou similaire agissant mécaniquement et dans lequel la réponse impulsionnelle est détectée en tant que rétroaction directe au poussoir, battant, marteau ou similaire.

2. Procédé selon la revendication 1, dans lequel l'impulsion mécanique (p) est appliquée à la bande de cerclage (20) par un coup de pression et/ou par un coup mécanique dont la réponse impulsionnelle est détectée et évaluée.

3. Procédé selon la revendication 1 ou 2, dans lequel la réponse impulsionnelle est détectée au moyen d'un capteur de force, d'un capteur de pression et/ou d'un capteur d'accélération (52) dont les signaux de capteur (38) sont évalués pour la détection de la tension de bande (32).

4. Procédé selon l'une quelconque des revendications 1 à 3, dans lequel la tension de bande (32) est mesurée à l'intérieur d'une section de bande de la bande de cerclage (20), qui peut être prédéterminée et qui se trouve à peu près au milieu entre deux articles (12) ou récipients (14) voisins du multipack à cerclage (10) maintenu ensemble par le cerclage (18).

5. Procédé selon l'une quelconque des revendications 1 à 4, dans lequel la tension de bande (32) d'au moins une bande de cerclage (20) de chaque multipack à cerclage (10) d'une suite de multipacks à cerclage (10) cerclés les uns après les autres et transportés les uns derrière les autres est détectée et est utilisée pour commander un dispositif d'évacuation (46, 56) qui élimine, du flux de multipacks, les multipacks à cerclage (10) dans lesquels une tension de bande (32) détectée se situe hors d'une plage de valeur de cosigne (54) prédéterminable.

6. Dispositif (66) de réalisation d'un multipack à cerclage (10) qui comprend au moins deux articles (12) ou récipients (14) avec au moins un cerclage (18) fermé de type bande ou ruban qui est tendu horizontalement autour de faces extérieures des articles (12) ou récipients (14) et est destiné à lier et à fixer les articles (12) ou récipients (14) les uns sur les autres, comprenant un dispositif de transport (68) pour transporter de manière ininterrompue ou cyclique des groupes d'articles ou de récipients (70) vers un dispositif de cerclage (72) qui est préparé et équipé pour appliquer une, deux ou plusieurs bandes de cerclage (20) similaires ou différentes en matière plastique ou en un matériau composite autour des faces extérieures (16) des articles (12) ou récipients (14), tout en appliquant une tension de bande (32) définissable et en fixant ensuite des extrémités de bande les unes sur les autres pour réaliser ledit cerclage (18), et comprenant un dispositif de mesure (74) pour détecter la tension de bande (32) qui présente un dispositif (34) ayant un poussoir, battant, marteau ou similaire agissant mécaniquement, destiné à appliquer une impulsion mécanique (p) à au moins une bande de cerclage (20) du cerclage (18), ainsi qu'un dispositif (36) destiné à détecter une réponse impulsionnelle à l'impulsion mécanique (p) en tant que rétroaction directe au poussoir, battant, marteau ou similaire.

7. Dispositif selon la revendication 6, dans lequel ledit dispositif (34) destiné à appliquer l'impulsion mécanique (p) à la bande de cerclage (20) comprend un poussoir (48) déplaçable de manière linéaire ou rotative et agissant mécaniquement.

8. Dispositif selon la revendication 6 ou 7, dans lequel le dispositif (36) de détection de la réponse impulsionnelle comprend un capteur de force, un capteur de pression et/ou un capteur d'accélération (52) qui est/sont couplé(s) à un circuit d'évaluation (40) destiné à détecter et évaluer les signaux de capteur (38) et à en déduire la tension de bande (32).

9. Dispositif selon l'une quelconque des revendications 6 à 8, qui est couplé à un dispositif d'évacuation (76) commandable qui élimine, du flux de multipacks, les multipacks à cerclage (10) dans lesquels une tension de bande (32) détectée se situe hors d'une plage de valeur de cosigne (54) prédéterminable.

10. Procédé de détection d'une tension de bande (32) d'un multipack à cerclage (10) qui comprend au moins deux articles (12) ou récipients (14) qui sont maintenus ensemble et reliés entre eux par l'intermédiaire d'au moins un cerclage (18) fermé de type bande ou ruban qui est tendu horizontalement autour de faces extérieures respectives des articles (12) ou récipients (14), ledit cerclage (18) étant formé par une, deux ou plusieurs bandes de cerclage (20) similaires ou différentes en matière plastique ou en un matériau composite dont les extrémités sont fixées les unes sur les autres avec une tension de bande (32) définissable, dans lequel la tension de bande (32) de ladite au moins une bande de cerclage (20) du cerclage (18) est détectée en détectant une réponse impulsionnelle d'une impulsion mécanique (p) appliquée à la bande de cerclage (20), dans lequel l'impulsion (p) est appliquée au moyen d'un poussoir, battant, marteau ou similaire agissant mécaniquement et dans lequel la réponse impulsionnelle est détectée en tant que rétroaction directe au poussoir, battant, marteau ou similaire.
